# EUROPEAN PATENT APPLICATION

(11) **EP 4 427 986 A1**
(43) Date of publication of application: **11.09.2024**
(21) Application number: 24161445.2
(22) Date of filing: 05.03.2024
(51) Int. Cl.: B60R 16/037, G06F 21/31

(54) **OBJECT RECOGNITION METHOD AND SYSTEM, COMPUTER DEVICE, AND STORAGE MEDIUM**

(30) Priority: 06.03.2023 CN 202310208510
(71) Applicant: NIO Software Technology (Shanghai) Co., Ltd., Shanghai (CN)
(72) Inventor: ZHAO, Hao, Shanghai, Building18-20, No.1355CaobaoRoad, MinhangDistrict (CN)
(74) Representative: v. Bezold & Partner Patentanwälte - PartG mbB

(57) **Abstract**

The disclosure relates to an object recognition method and system, a computer device, a storage medium, and a computer program product. The method includes: obtaining, in response to a trigger signal for a preset behavior state of an object, vehicle usage data of the object and reference vehicle usage data of at least one recognized candidate object; and determining that a similarity between the vehicle usage data and the reference vehicle usage data is greater than a preset threshold and that the object is recognized. The object recognition method and system disclosed herein simplify the recognition step, improve the recognition efficiency, and implement automatic object recognition.

## Description

### TECHNICAL FIELD

The disclosure relates to the field of intelligent driving technologies, and in particular, to an object recognition method and system, a computer device, and a storage medium.

### BACKGROUND

With the development of automobile intelligent technologies, vehicle cockpits gradually carry more functional needs of users. With the enrichment of the functions of the vehicle cockpits, many customized functions for users have emerged. In various aspects, customized functions first require identity recognition of a user before loading preset configurations or implementing customized recommendations.

In a conventional technology, during the implementation of customized functions, users are required to manually input identity credentials or manually perform identity verification in order to identify identities of the users. This operation is cumbersome and inefficient, and has poor user experience.

### SUMMARY

In view of this, it is necessary to address the above technical problems and provide an object recognition method and system, a computer device, a storage medium, and a computer program product, which can simplify the operation to improve the efficiency.

According to a first aspect, an embodiment of the disclosure provides an object recognition method. The method includes:
obtaining, in response to a trigger signal for a preset behavior state of an object, vehicle usage data of the object and reference vehicle usage data of at least one recognized candidate object; and
determining that a similarity between the vehicle usage data and the reference vehicle usage data is greater than a preset threshold and that the object is recognized.

In one embodiment, in response to obtaining reference vehicle usage data of a plurality of recognized candidate objects, the step of determining that a similarity between the vehicle usage data and the reference vehicle usage data is greater than a preset threshold and that the object is recognized includes:
determining a similarity between each group of reference vehicle usage data among a plurality of groups of reference vehicle usage data and the vehicle usage data; and
determining that a largest similarity result among a plurality of groups of similarity results corresponding to the plurality of groups of reference vehicle usage data is greater than the preset threshold and that the object is recognized.

In one embodiment, after the determining that the object is recognized, the method further includes:
obtaining a vehicle function that a candidate object corresponding to reference vehicle usage data with a largest similarity result has permission to use; and
authorizing the object to use the vehicle function.

In one embodiment, the vehicle usage data includes a plurality of groups of usage sub-data, and the step of determining that a similarity between the vehicle usage data and the reference vehicle usage data is greater than a preset threshold and that the object is recognized includes:
obtaining a sub-similarity between each group of usage sub-data and corresponding reference usage sub-data of the reference vehicle usage data;
determining that the sum of a plurality of groups of sub-similarity results corresponding to the plurality of groups of usage sub-data is the similarity between the vehicle usage data and the reference vehicle usage data; and
determining that the similarity is greater than a preset threshold and that the object is recognized.

In one embodiment, the vehicle usage data includes seat usage data corresponding to a vehicle seat, and the step of obtaining, in response to a trigger signal for a preset behavior state of an object, vehicle usage data includes:
in response to a trigger signal for the object using the vehicle seat, obtaining the seat usage data corresponding to the vehicle seat; and/or
the vehicle usage data includes device usage data corresponding to a terminal device in a vehicle, and the step of obtaining, in response to a trigger signal for a preset behavior state of an object, vehicle usage data includes:
   in response to a trigger signal for the object using the terminal device in the vehicle, obtaining the device usage data corresponding to the terminal device.

In one embodiment, the device usage data includes device position data, and the step of obtaining the device usage data corresponding to the terminal device includes:
obtaining device sensor data corresponding to the terminal device; and
determining a position of the terminal device based on the device sensor data and obtaining the device position data; and/or
the device usage data includes device position change amplitude data, and the step of obtaining the device usage data corresponding to the terminal device includes:
   obtaining device sensor data corresponding to the terminal device; and
   obtaining device position change amplitude data indicating a position change amplitude of the terminal device based on the device sensor data.

According to a second aspect, an embodiment of the disclosure further provides an object recognition system. The system includes:
an obtaining module configured to obtain, in response to a trigger signal for a preset behavior state of an object, vehicle usage data of the object and reference vehicle usage data of at least one recognized candidate object; and
a determination module configured to determine that a similarity between the vehicle usage data and the reference vehicle usage data is greater than a preset threshold and that the object is recognized.

In one embodiment, in response to obtaining reference vehicle usage data of a plurality of recognized candidate objects, the determination module includes:
a first determination sub-module configured to determine a similarity between each group of reference vehicle usage data among a plurality of groups of reference vehicle usage data and the vehicle usage data; and
a second determination sub-module configured to determine that a largest similarity result among a plurality of groups of similarity results corresponding to the plurality of groups of reference vehicle usage data is greater than the preset threshold and that the object is recognized.

In one embodiment, after the second determination sub-module, the system further includes:
a first obtaining sub-module configured to obtain a vehicle function that a candidate object corresponding to reference vehicle usage data with a largest similarity result has permission to use; and
an authorization module configured to authorize the object to use the vehicle function.

In one embodiment, the vehicle usage data includes a plurality of groups of usage sub-data, and the determination module includes:
a second obtaining sub-module configured to obtain a sub-similarity between each group of usage sub-data and corresponding reference usage sub-data of the reference vehicle usage data;
a third determination sub-module configured to determine that the sum of a plurality of groups of sub-similarity results corresponding to the plurality of groups of usage sub-data is the similarity between the vehicle usage data and the reference vehicle usage data; and
a fourth determination sub-module configured to determine that the similarity is greater than a preset threshold and that the object is recognized.

In one embodiment, the vehicle usage data includes seat usage data corresponding to a vehicle seat, and the obtaining module includes:
a third obtaining sub-module configured to: in response to a trigger signal for the object using the vehicle seat, obtain the seat usage data corresponding to the vehicle seat; and/or
the vehicle usage data includes device usage data corresponding to a terminal device in a vehicle, and the obtaining module includes:
   a fourth obtaining sub-module configured to: in response to a trigger signal for the object using the terminal device in the vehicle, obtain the device usage data corresponding to the terminal device.

In one embodiment, the device usage data includes device position data, and the fifth obtaining sub-module includes:
a first obtaining unit configured to obtain device sensor data corresponding to the terminal device; and
a first determination unit configured to determine a position of the terminal device based on the device sensor data and obtain the device position data; and/or
the device usage data includes device position change amplitude data, and the fifth obtaining sub-module includes:
   a second obtaining unit configured to obtain device sensor data corresponding to the terminal device; and
   a second determination unit configured to obtain device position change amplitude data indicating a position change amplitude of the terminal device based on the device sensor data.

According to a third aspect, an embodiment of the disclosure further provides a computer device. The computer device includes a memory and a processor. A computer program is stored in the memory. The processor, when executing the computer program, implements the steps of the method described in any embodiment(s) of the disclosure.

According to a fourth aspect, an embodiment of the disclosure further provides a computer-readable storage medium. The computer-readable storage medium has a computer program stored thereon. The computer program, when executed by a processor, implements the steps of the method described in any embodiment(s) of the disclosure.

According to a fifth aspect, an embodiment of the disclosure further provides a computer program product. The computer program product includes a computer program. The computer program, when executed by a processor, implements the steps of the method described in any embodiment(s) of the disclosure.

In the embodiments of the disclosure, in response to the trigger signal for the preset behavior state of the object, the vehicle usage data of the object and the reference vehicle usage data of the at least one recognized candidate object are obtained. Recognition of the object is determined based on the similarity between the vehicle usage data of the object and the reference vehicle usage data of the at least one recognized candidate object. When the similarity between the vehicle usage data of the object and the reference vehicle usage data is greater than the preset threshold, it is determined that the object is recognized. In this way, an automatic recognition of the object can be realized. When an object uses the vehicle, recognition is performed based on generated usage data, eliminating the need for the object to manually input recognition and verification information, thereby simplifying the object recognition operation process, improving the recognition efficiency, and improving the user experience. In addition, recognizing the object by comparing the vehicle usage data of the object with the reference vehicle usage data of the candidate object recognized by the vehicle improves the recognition efficiency and also ensures the recognition accuracy. Such object recognition is easy to implement and can be applied to different application scenarios.

### BRIEF DESCRIPTION OF DRAWINGS

FIG. 1 is a schematic flowchart of an object recognition method according to an embodiment;
FIG. 2 is a schematic flowchart of an object recognition method according to an embodiment;
FIG. 3 is a schematic flowchart of an object recognition method according to an embodiment;
FIG. 4 is a schematic flowchart of an object recognition method according to an embodiment;
FIG. 5 is a schematic diagram of an object recognition system according to an embodiment;
FIG. 6 is a structural block diagram of an object recognition system according to an embodiment; and
FIG. 7 is a diagram of an internal structure of a computer device according to an embodiment.

### DESCRIPTION OF EMBODIMENTS

In order to make the objective, technical solutions, and advantages of the embodiments of the disclosure clearer, the embodiments of the disclosure are further described in detail below with reference to the accompanying drawings and the embodiments. It should be understood that the specific embodiments described herein are merely used to explain the embodiments of the disclosure and are not intended to limit the embodiments of the disclosure.

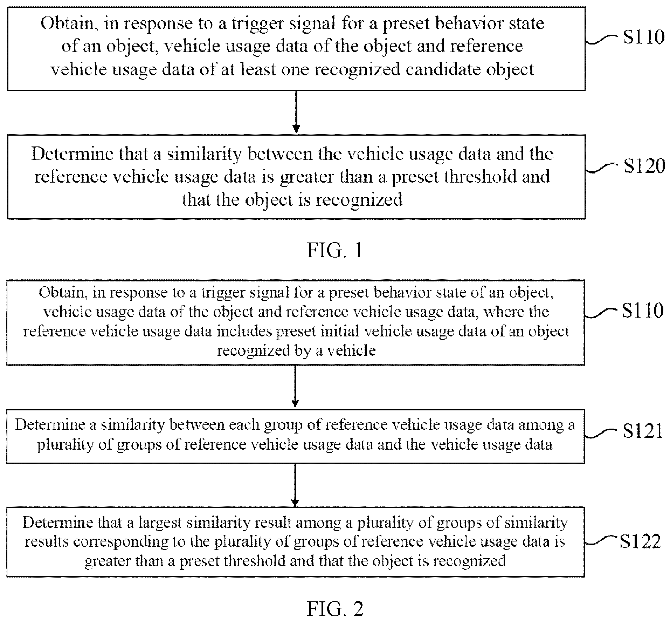

In one embodiment, as shown in FIG. 1, an object recognition method is provided. The method includes the following steps:

In step S110, obtain, in response to a trigger signal for a preset behavior state of an object, vehicle usage data of the object and reference vehicle usage data of at least one recognized candidate object.

In various aspects, when the object uses the vehicle, the vehicle usage data of the object is obtained in response to the trigger signal for the preset behavior state of the object. The object includes a user using the vehicle. In one example, the vehicle usage data may include but is not limited to usage data of a vehicle seat, seat belt usage data, and usage data of a terminal device in the vehicle. In one example, the vehicle usage data may include data generated during use of the vehicle or a device in the vehicle. Methods for obtaining the data may include but are not limited to direct obtaining and obtaining through a sensor. In various aspects, the preset behavior state may be determined according to an actual application scenario. In some implementations, the preset behavior state may be determined based on the vehicle usage data that needs to be obtained. For example, when the vehicle usage data that needs to be obtained includes the usage data of the vehicle seat, the preset behavior state of the object may be set to include the object using the vehicle seat, and when the object uses the vehicle seat, the usage data of the vehicle seat of the object is obtained. The reference vehicle usage data of the at least one recognized candidate object is obtained. In some aspects, the vehicle may correspond to one recognized candidate object. In some other aspects, one vehicle may correspond to one or more recognized candidate objects. In an implementation, for a candidate object, vehicle functions that can be accessed by the candidate object may be set depending on the identity of the object. Different vehicle functions may be accessed by different candidate objects. In one example, the vehicle may correspond to one or more recognized candidate objects, and the obtained reference vehicle usage data may be reference vehicle usage data corresponding to the one or more candidate objects, and the reference vehicle usage data may be obtained from a specific actual application scenario. In one example, the reference vehicle usage data may be determined by vehicle usage data of a recognized object corresponding to the trigger signal from vehicle usage data of all recognized objects. The determination method may be any suitable methods for the actual application scenario. In one example, vehicle usage data is obtained based on a preset period. After vehicle usage data is obtained a plurality of times, an array of vehicle usage data may be obtained, and the obtained data may be compared with the reference vehicle usage data. In an implementation, the reference vehicle usage data may be stored in a preset database. In one example, when the reference vehicle usage data corresponds to reference vehicle usage data of one candidate object, if the preset database includes reference vehicle usage data of a plurality of candidate objects, a preset data determination method may be used to determine reference vehicle usage data of one particular candidate object from the preset database. For example, the reference vehicle usage data of this particular candidate object may be obtained based on a selection instruction of an object to be recognized.

In step S 120, determine that a similarity between the vehicle usage data and the reference vehicle usage data is greater than a preset threshold and that the object is recognized.

In various aspects, after the vehicle usage data and the reference vehicle usage data are obtained, whether the object is recognized is determined based on the similarity between the vehicle usage data and the reference vehicle usage data. Specifically, the obtained vehicle usage data may include vehicle usage data with one or more dimensions. In one example, the obtained vehicle usage data may be in the form of an array. Therefore, the obtained vehicle usage data may include a one-dimensional array or a multi-dimensional array. In some implementations, the reference vehicle usage data may include reference vehicle usage data corresponding to one or more candidate objects.

In one example where reference vehicle usage data of one candidate object is obtained, vehicle usage data is also one group of data and there is a correspondence between the reference vehicle usage data and the vehicle usage data. That is, when the vehicle usage data is a one-dimensional array, obtained reference vehicle usage data is a one-dimensional array, and when the vehicle usage data is a multi-dimensional array, obtained reference vehicle usage data is a multi-dimensional array. When a similarity is determined, the calculation is performed based on the correspondence between the vehicle usage data and the reference vehicle usage data. Since there is a correspondence between the vehicle usage data and the reference vehicle usage data, a similarity between two groups of data may be directly calculated.

In another example where reference vehicle usage data of a plurality of candidate objects is obtained, when the vehicle usage data corresponds to a group of data, each candidate object corresponds to a group of reference vehicle usage data. When a similarity is used to determine whether the object is recognized, the object recognition may be implemented by determining whether a similarity between reference vehicle usage data of each candidate object and vehicle usage data is greater than the preset threshold. In some aspects, object recognition may be determined by comparing the similarity between the reference vehicle usage data of each candidate object and the vehicle usage data with the preset threshold. If the similarity is greater than the preset threshold, it is determined that the object is recognized. In some other aspects, object recognition may be determined by calculating a plurality of groups of similarity results between a plurality of groups of reference vehicle usage data of a plurality of candidate objects and vehicle usage data and using a largest similarity result to compare with the preset threshold. When the largest similarity result is greater than the preset threshold, it is determined that the object is recognized. In an application scenario where one vehicle corresponds to a plurality of recognized candidate objects, the reference vehicle usage data may include a plurality of groups of reference vehicle usage data of a plurality of candidate objects, and each group of reference vehicle usage data includes a portion of or all vehicle usage data of one recognized candidate object.

In some implementations, a similarity may be determined by, but is not limited to, calculating a cosine similarity between data or calculating a Euclidean distance between data. In one example, when the data corresponds to a plurality of groups of data, a final similarity may be determined based on a plurality of similarities of the plurality of groups of data, for example, the sum of the plurality of similarities of the plurality of groups of data is used as the final similarity. For another example, different weights may be allocated to different groups of data based on different features of the plurality of groups of data, and the weighted sum of similarities of the plurality of groups of data may be used as the final similarity.

When a similarity is greater than the preset threshold, any difference between vehicle usage data and reference vehicle usage data is considered small and that an object corresponding to the vehicle usage data is the object corresponding to the reference vehicle usage data. Because the object corresponding to the reference vehicle usage data is a candidate object recognized by the vehicle, the object corresponding to the vehicle usage data is recognized. In an implementation, when one vehicle corresponds to a plurality of candidate objects that is recognized by the vehicle, different candidate objects may have different permissions to use the vehicle function. During object recognition, when the object is recognized, any function usage permissions that may be granted to the object are based on function usage permissions of a candidate object corresponding to the reference vehicle usage data. When the reference vehicle usage data includes a plurality of groups of reference vehicle usage data, if a group of similarity results between the plurality of groups of reference vehicle usage data and the vehicle usage data are greater than the preset threshold, any function usage permissions that may be granted to the object are based on function usage permissions of a candidate object corresponding to the reference vehicle usage data with a largest similarity result. In one example, when the similarity is less than the preset threshold, it may be considered that the object is not recognized. The object does not match with the vehicle. In one example, the reference vehicle usage data may be normalized standard data. After the vehicle usage data is obtained, normalization is performed on the data first to obtain normalized data.

In various aspects, in response to the trigger signal for the preset behavior state of the object, the vehicle usage data of the object and the reference vehicle usage data of the at least one recognized candidate object are obtained. Whether the object is recognized is determined based on the similarity between the vehicle usage data of the object and the reference vehicle usage data. When the similarity between the vehicle usage data of the object and the reference vehicle usage data is greater than the preset threshold, the object is recognized. Such object recognition provides an automatic recognition of the object. When an object uses the vehicle, recognition is performed based on generated usage data, eliminating the need for the object to manually input recognition and verification information, thereby simplifying the object recognition operation process, improving the recognition efficiency, and improving the user experience. In addition, recognizing the object by comparing the vehicle usage data of the object with the reference vehicle usage data of the candidate object recognized by the vehicle improves the recognition efficiency and also ensures the recognition accuracy. Such object recognition is easy to implement and can be applied to different application scenarios.

In one embodiment, as shown in FIG. 2, in response to obtaining reference vehicle usage data of a plurality of recognized candidate objects, the step of determining that a similarity between the vehicle usage data and the reference vehicle usage data is greater than a preset threshold and that the object is recognized includes the following steps:
In step S 121, determine a similarity between each group of reference vehicle usage data among a plurality of groups of reference vehicle usage data and the vehicle usage data.

In step S 122, determine that a largest similarity result among a plurality of groups of similarity results corresponding to the plurality of groups of reference vehicle usage data is greater than the preset threshold and that the object is recognized.

In various aspects, when a vehicle corresponds to a plurality of recognized candidate objects, the reference vehicle usage data may include a plurality of groups of reference vehicle usage data of the plurality of candidate objects. Each group of reference vehicle usage data may include all or a portion of vehicle usage data of a corresponding candidate object. A similarity between reference vehicle usage data and vehicle usage data is calculated, and a plurality of groups of reference vehicle usage data correspond to a plurality of groups of similarity results. If a largest similarity result among the plurality of groups of similarity results corresponding to the plurality of groups of reference vehicle usage data is greater than the preset threshold, it is determined that the object is recognized. A method for calculating a similarity may include but is not limited to calculating a cosine similarity between data or calculating a Euclidean distance between data. In some aspects, object recognition may be determined by comparing the similarity between each group of reference vehicle usage data and the vehicle usage data with the preset threshold. If the similarity is greater than the preset threshold, it is determined that the object is recognized. In some other aspects, object recognition may be determined by calculating a plurality of groups of similarity results between a plurality of groups of reference vehicle usage data and vehicle usage data and using a largest similarity result to compare with the preset threshold. When the largest similarity result is greater than the preset threshold, it is determined that the object is recognized. In one example, after the object is recognized, reference vehicle usage data with a largest similarity result is determined as target vehicle usage data, a corresponding access for vehicle function is determined based on a candidate object of the target vehicle usage data, and the object is authorized to use the vehicle function.

In various aspects, in response to obtaining the reference vehicle usage data of the plurality of recognized candidate objects, recognizing objects through the similarity between the reference vehicle usage data and the obtained vehicle usage data provides an easy-to-implement and simplified recognition process. The subject matter disclosed herein improves the recognition accuracy, improves the user experience, and can be applied to an application scenario where one vehicle corresponds to a plurality of recognized candidate objects. The subject matter disclosed herein can determine the most likely matching object with a largest similarity result from the plurality of recognized candidate objects corresponding to the vehicle, thereby facilitating subsequent steps such as vehicle function authorization and any other further refinement of the recognition of the object to be recognized.

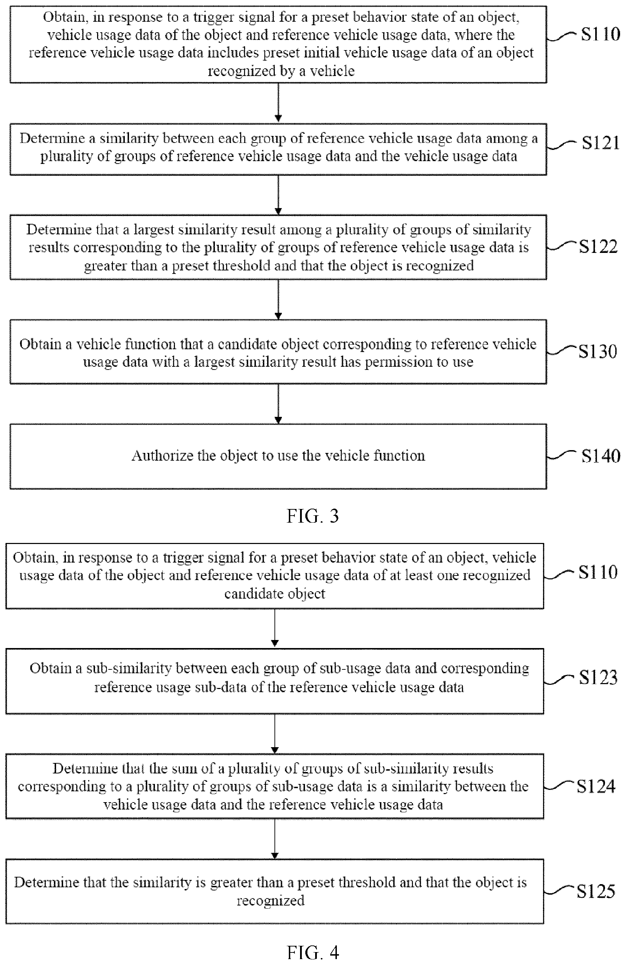

In one embodiment, as shown in FIG. 3, after the determining that the object is recognized, the method further includes the following steps:
In step S 130, obtain a vehicle function that a candidate object corresponding to reference vehicle usage data with a largest similarity result has permission to use.

In step S 140, authorize the object to use the vehicle function.

In various aspects, when the similarity between the vehicle usage data and the reference vehicle usage data is greater than the preset threshold, any difference between the vehicle usage data and the reference vehicle usage data is considered small and that the object is recognized by the vehicle. One vehicle may correspond to one or more recognized candidate objects, and different candidate objects may have different permissions to use the vehicle function. When it is determined that the object is recognized by the vehicle, a corresponding vehicle function is determined based on a candidate object for the reference vehicle usage data. In various aspects, there is a preset association relationship between the candidate object that is recognized by the vehicle and the vehicle function. The preset association relationship may be preset according to the actual application scenario. In one example, the corresponding vehicle function may be directly determined based on the candidate object and the preset association relationship, or the vehicle function corresponding to the reference vehicle usage data may be determined based on object information of the candidate object, or other suitable ways. In some aspects, the vehicle may correspond to a plurality of recognized candidate objects. In response to obtaining reference vehicle usage data of the plurality of candidate objects, when the object is granted with vehicle function usage permissions after the object is recognized, a candidate object corresponding to reference vehicle usage data with a largest similarity result is determined, and a corresponding vehicle function is obtained. The object is authorized to use the vehicle function, so that the object can use the vehicle function. In one example, the vehicle function may be passively used or actively enabled. When the object is authorized and the authorized vehicle function is passively used, function usage permission can be granted to the object, and the object can choose whether to use the function. When the authorized vehicle function is actively enabled, the vehicle automatically enables the vehicle function for being used by the object.

In various aspects, by authorizing a recognized object with vehicle function usage permissions based on the vehicle function usage permissions corresponding to the candidate object for the reference vehicle usage data, different function authorizations for different objects can be set during object recognition. By setting different vehicle function authorizations for different objects and determining the corresponding vehicle function by the candidate object corresponding to the reference vehicle usage data with the largest similarity result, such object recognition can be applied to more application scenarios, further refines the purpose of object recognition, and improves the user experience.

In one embodiment, as shown in FIG. 4, the vehicle usage data includes a plurality of groups of usage sub-data. The step of determining that a similarity between the vehicle usage data and the reference vehicle usage data is greater than a preset threshold and that the object is recognized includes the following steps:

In step S 123, obtain a sub-similarity between each group of usage sub-data and corresponding reference usage sub-data of the reference vehicle usage data.

In step S 124, determine that the sum of a plurality of groups of sub-similarity results corresponding to the plurality of groups of usage sub-data is the similarity between the vehicle usage data and the reference vehicle usage data.

In step S125, determine that the similarity is greater than a preset threshold and that the object is recognized.

In some aspects, the vehicle usage data may include a plurality of groups of usage sub-data. When the vehicle usage data includes a plurality of groups of usage sub-data, when a similarity is calculated, the calculation may be performed in groups. Reference usage sub-data corresponding to each group of usage sub-data is obtained from the reference vehicle usage data, and a sub-similarity between each group of usage sub-data and corresponding reference usage sub-data is calculated to obtain a plurality of sub-similarities. The sum of the plurality of groups of sub-similarity results is used as the similarity between the vehicle usage data and the reference vehicle usage data. In one example, when the vehicle usage data is divided into a plurality of groups of usage sub-data, the division may be based on different dimensions of the vehicle usage data, such as vehicle seat data and temperature data. In an implementation, when one group of usage sub-data corresponds to a plurality of pieces of data, similarity values of the plurality of pieces of data may be determined, and a sub-similarity is determined based on the similarity values of the plurality of pieces of data. When it is determined that the obtained similarity is greater than the preset threshold, it is determined that the object is recognized by the vehicle, where the preset threshold may be pre-determined based on an actual application scenario.

In various aspects, the vehicle usage data may include a plurality of groups of sub-data, and the similarity between the vehicle usage data and the reference vehicle usage data is determined based on sub-similarities corresponding to the plurality of groups of sub-data. The determined similarity determines whether the object is recognized. In this way, a plurality of dimensions of vehicle usage data can be compared and analyzed to ensure the accuracy of the determined similarity, improve the object recognition accuracy, and improve the user experience.

In one embodiment, the vehicle usage data includes seat usage data corresponding to a vehicle seat, and the step of obtaining, in response to a trigger signal for a preset behavior state of an object, vehicle usage data includes:
in response to a trigger signal for the object using the vehicle seat, obtaining the seat usage data corresponding to the vehicle seat.

In some aspects, the preset behavior state of the object includes the object using the vehicle seat, and the vehicle usage data includes the seat usage data corresponding to the vehicle seat. When the object uses the vehicle seat, in response to the trigger signal for the object using the vehicle seat, the seat usage data corresponding to the vehicle seat is obtained. The seat usage data may include but is not limited to a pressure value sensed by a seat cushion, a pressure bearing area sensed by the seat cushion, a pressure value sensed by a backrest, a pressure bearing area sensed by the seat cushion, seat adjustment position information, and backrest adjustment position information. In some implementations, the seat usage data may be determined through a sensor corresponding to the vehicle seat. The sensor corresponding to the vehicle seat may include but is not limited to a seat cushion sensor, a backrest sensor, and a vehicle seat image sensor. A determination method for an object using the vehicle seat may include but is not limited to a vehicle seat pressure being greater than a preset pressure threshold, a vehicle seat temperature being greater than a preset temperature value, an image recognition system detecting that there is a target object in the vehicle seat, and/or in other manners that are suitable for an actual application scenario. In one example, during data obtaining, the data may be obtained directly at one time, or a plurality of groups of data may be obtained periodically. When a plurality of groups of data are obtained periodically, an obtaining period may be set based on the actual application scenario.

In various aspects, the seat usage data corresponding to the vehicle seat can be obtained by comparison and determination of the usage data of the vehicle seat when the object uses the vehicle seat. Pressure, temperature, and other feature information of the object can be determined through the usage data of the vehicle seat to perform object recognition. Using the usage data of the vehicle seat to recognize an object ensures the recognition accuracy and improves the user experience. In addition, the collection of the usage data of the vehicle seat is simple and easy to implement, and can be applied to more application scenarios.

In one embodiment, the vehicle usage data includes device usage data corresponding to a terminal device in a vehicle, and the step of obtaining, in response to a trigger signal for a preset behavior state of an object, vehicle usage data includes:
in response to a trigger signal for the object using the terminal device in the vehicle, obtaining the device usage data corresponding to the terminal device.

In various aspects, the preset behavior state of the object includes the object using the terminal device in the vehicle, and the vehicle usage data includes the device usage data corresponding to the terminal device. In response to the trigger signal for the object using the terminal device in the vehicle, the device usage data corresponding to the terminal device is obtained. The device usage data corresponding to the terminal device may include but is not limited to position data of the terminal device and movement data of the terminal device. In one example, a determination method for an object using the terminal device in the vehicle may include but is not limited to determination based on status data of the terminal device and determination based on image data of the object. In an implementation, the trigger signal for the object to use the terminal device in the vehicle may be tailored for the actual application scenario. In one example, different manners in which the object uses the terminal device in the vehicle may correspond to different trigger signals. For example, when the terminal device is a pair of smart glasses, the object wearing the smart glasses and the object wearing the smart glasses to perform a target action may correspond to different trigger signals. When the object performs a corresponding action, a trigger signal for the object using the terminal device in the vehicle is generated. In one example, the terminal device in the vehicle includes a terminal device that may be connected to the vehicle via wire or wirelessly, such as smart glasses and smart headphones. In some implementations, the device usage data may be obtained through a device sensor, cloud data corresponding to the device, etc. Types of the device sensor may include but are not limited to a position sensor, a temperature sensor, and a pressure sensor. In one example, during data obtaining, the data may be obtained directly at one time, or a plurality of groups of data may be obtained periodically. When a plurality of groups of data are obtained periodically, an obtaining period may be set according to the actual application scenario.

In various aspects, the device usage data of the terminal device can be obtained when the object uses the terminal device in the vehicle, thereby implementing recognition of the object based on the usage data of the terminal device. Because the terminal device usage data between different objects is usually significantly different, using terminal device usage data of the object for object recognition ensures the object recognition accuracy and improves the user experience. In addition, performing object recognition based on the usage data of the terminal device can be applied to other vehicle application scenarios where terminal devices are used, such as intelligent cockpits, which improves the intelligence of vehicles.

In one embodiment, the device usage data includes device position data, and the step of obtaining the device usage data corresponding to the terminal device includes:
obtaining device sensor data corresponding to the terminal device; and
obtaining the device position data indicating a position of the terminal device based on the device sensor data.

In various aspects, the device usage data corresponding to the terminal device includes the device position data of the terminal device. Specifically, the device sensor data corresponding to the terminal device is obtained, the position of the terminal device can be determined based on the device sensor data, and the device position data is obtained. The position of the terminal device may be determined directly through the device sensor data, or the position of the terminal device may be obtained after the device sensor data is processed. In some aspects, the position of the terminal device includes a relative position of the terminal device in the vehicle, that is, a position of the terminal device relative to a preset reference point in the vehicle. The preset reference point may be determined according to the actual application scenario. The device position data may include but is not limited to coordinate system data of the terminal device. For example, a coordinate system may be established in the vehicle with the preset reference point as an origin. The device sensor may include but is not limited to a GPS positioning sensor and a vision sensor, and the device sensor data may include but is not limited to positioning sensor data and vision sensor data. In various aspects, because the device position data of the terminal device is obtained when the object uses the terminal device, the obtained device position data is position data when the terminal device is being used.

In one example, the position of the terminal device may be determined and obtained based on the device sensor data and the position data of the vehicle. Specifically, a position of the vehicle can be determined through vehicle position data. In some implementations, the vehicle position data may be considered as position data of a fixed preset reference point in the vehicle, as position data of an outline of the vehicle, or as other data that can determine the position of the vehicle.

In various aspects, when the terminal device is a mobile terminal, corresponding device position data of the terminal device may be different when different objects use the terminal device. Therefore, feature information of an object who uses the terminal device may be analyzed and determined through the device position data of the terminal device. In an implementation, if the terminal device is a pair of smart glasses, position data of the smart glasses is determined based on the device sensor data of the terminal device. This position data of the smart glasses may analyze position information of an object's eyes when the object wears the smart glasses to determine feature information of the object, such as an upper body height of the object. In one example, when the terminal device is a pair of smart glasses, the device position data of the terminal device may include spatial information of a wearing position of the glasses.

In various aspects, when an object uses a terminal device, device position data of the terminal device is obtained, so that feature information of the object who uses the terminal device can be determined based on the device position data of the terminal device. In this way, the device position data and the reference vehicle usage data can be compared to analyze whether the feature information of the object matches with that of any recognized object. In this way, the object recognition based on a state when the object uses the terminal device improves the recognition accuracy and improves the user experience.

In one embodiment, the device usage data includes device position change amplitude data, and the step of obtaining the device usage data corresponding to the terminal device includes:
obtaining device sensor data corresponding to the terminal device; and
obtaining device position change amplitude data indicating a position change amplitude of the terminal device based on the device sensor data.

In various aspects, the device usage data corresponding to the terminal device includes device position change amplitude data. Specifically, the device sensor data corresponding to the terminal device is obtained, the position change amplitude of the terminal device is determined based on the device sensor data, and the device position change amplitude data is obtained. The device sensor data may include but is not limited to monitored coordinate system data when the terminal device changes position. Based on device sensor data generated during a position change of the terminal device, the position change amplitude of the terminal device is determined. The device sensor may include but is not limited to a GPS positioning sensor and/or a vision sensor, and the device sensor data may include but is not limited to positioning sensor data and vision sensor data. In one example, when the sensor data is the coordinate system data of the terminal device, the position change amplitude of the terminal device may be determined based on two groups of data with a largest change in coordinate system data within a preset period. The preset period may be a preset time period, or may be a time duration in which the object performs a target action. For example, in response to the object nodding his or her head, device sensor data is obtained, the time duration in which the object nods his or her head is used as a data obtaining period, the position change amplitude is determined based on the device sensor data, and the device position change amplitude data is obtained. In various aspects, when the object uses the terminal device while the object is moving, the device sensor data of the terminal device is obtained, and the obtained device sensor data may be a plurality of groups of data. In one example, when the terminal device is a pair of smart glasses, the position change amplitude data of the terminal device may include movement range information of the smart glasses.

In various aspects, when an object uses a terminal device while moving, device position change amplitude data of the terminal device is obtained, so that movement feature information of the object can be determined based on the device position change amplitude data. In this way, device position change amplitude data and the reference vehicle usage data can be compared to analyze whether the movement feature information of the object matches with that of any recognized object. In this way, the object recognition based on a state when the object uses the terminal device while moving improves the recognition accuracy and improves the user experience.

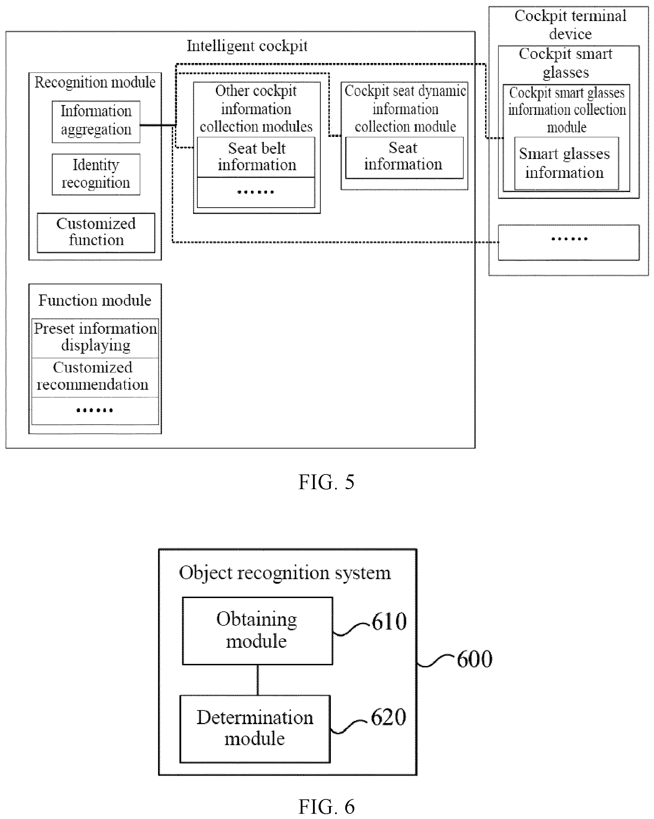

FIG. 5 is a schematic diagram of an object recognition system according to an exemplary embodiment. As shown in FIG. 5, the system may be used for identity recognition of a user in a vehicle. As shown, the vehicle includes an intelligent cockpit module and a cockpit terminal device module. The cockpit terminal device module may include a cockpit smart glasses module, and the intelligent cockpit module includes a recognition module, a cockpit information collection module, and a cockpit function module. The cockpit smart glasses module includes a smart glasses information collection module. The smart glasses information collection module may include but is not limited to a glasses wearing position spatial information collection module and a smart glasses movement range information collection module. Specifically, the glasses wearing position spatial information collection module collects a relative spatial position (for example, which may correspond to three relative coordinates x, y, and z in a space rectangular coordinate system) between the smart glasses and the cockpit of the vehicle after a user wears the smart glasses. The information can be used to determine height and sitting posture information of the user. In some aspects, the information may be collected a plurality of times based on a preset period, to obtain an array through a plurality of collections. The smart glasses movement range information collection module collects the maximum movement range of the smart glasses in all directions relative to an original position in a wearing process of the user, and in one example, may collect maximum movement ranges in three directions x, y, and z in the space rectangular coordinate system, that is, two values including positive and negative maximum ranges in each direction. It may be understood that the cockpit terminal device module may further include modules corresponding to other terminal devices. The cockpit information collection module includes a seat dynamic information collection module and other information collection modules of the vehicle. Specifically, the seat dynamic information collection module determines a user identity by collecting dynamic information when the user uses the seat. Vehicle seat information collected by the seat dynamic information collection module may include but is not limited to a pressure value sensed by a seat cushion, a pressure bearing area sensed by the seat cushion, a pressure value sensed by a backrest, a pressure bearing area sensed by the seat cushion, seat adjustment position information, and backrest adjustment position information. All the above information is dynamically collected, that is, when identity recognition is performed, collection is performed at regular intervals based on a preset period. The preset period may set according to an actual application scenario. In one example, it is set that collection is performed 10 times per minute, and each collection item forms one single-dimensional array with a length of N (N is the number of collections). The other information collection modules of the vehicle may collect other information of the vehicle cockpit, such as seat belt information (which may include but is not limited to seat belt extending and retraction length information) and temperature adjustment change information. The recognition module includes an information aggregation module, an identity recognition module, and a customized function module. The information collection module aggregates data from all information collection modules and sends the data to the identity recognition module for analysis. The identity recognition module obtains information from the information collection modules, extracts features from the information, and matches the extracted features with features of each user whose identity has been stored in the module. If the matching succeeds, identity recognition is completed. Specifically, a matching process includes the following steps: Incoming multi-dimensional data is first normalized, and all feature values are mapped to a range between 0 and 1; the multi-dimensional array is split into a plurality of single-dimensional arrays, and each array represents all information points in one collection item; a Euclidean distance between the array of the collection item and a same array of a collection item of a user that is stored in the system is calculated, to obtain a distance value N; a distance value calculated for each collection point is added to obtain a distance sum M between all feature information collected from the user and feature information of a user selected from a library of the system (a larger M indicates a larger difference between features of the two users at each dimension and a lower similarity between the two users); the distance sum M between the feature information of the user and all users in the system is calculated, take the minimum value (that is, the most similar user in the system) for comparison, and if the minimum value is less than a matching threshold, matching succeeds, that is, identity recognition succeeds; and if the minimum value is still greater than the matching threshold, the identity recognition fails. The customized function module is configured to send corresponding information to the cockpit function module based on a recognized identity. The cockpit function module enables a customized function for the user identity based on the received information.

In various aspects, non-sensory identity recognition based on interaction information between the user and the vehicle in the intelligent cockpit of the vehicle simplifies the steps of identity recognition by not requiring the user to input verification information or manually perform identity verification, ensures the recognition accuracy, and improves the user experience.

It should be understood that although the steps in the flowcharts in the accompanying drawings are shown in sequence as indicated by the arrows, these steps are not necessarily executed in the order indicated by the arrows. Unless explicitly stated herein, there is no order restriction on the execution of these steps, and these steps can be executed in other orders. Moreover, at least some of the steps in the accompanying drawings may include a plurality of steps or stages. These steps or stages are not necessarily executed at the same time, but may be executed at different times. The execution order of these steps or stages is not necessarily sequential, but they may be executed in turn or alternately with other steps or at least some of the steps or stages in other steps.

An embodiment of the disclosure further provides an object recognition system for implementing the object recognition methods described above. The solution to the problem provided by the system is similar to the solution described in the above methods. Therefore, various embodiments of the object recognition system will be described below with reference to the above descriptions with certain elements not described in detail or will be omitted so as not to obscure the relevant details of the descriptions herein.

In one embodiment, as shown in FIG. 6, an object recognition system 600 is provided, including:
an obtaining module 610 configured to obtain, in response to a trigger signal for a preset behavior state of an object, vehicle usage data of the object and reference vehicle usage data of at least one recognized candidate object; and
a determination module 620 configured to determine that a similarity between the vehicle usage data and the reference vehicle usage data is greater than a preset threshold and that the object is recognized.

In one embodiment, in response to obtaining reference vehicle usage data of a plurality of recognized candidate objects, the determination module includes:
a first determination sub-module configured to determine a similarity between each group of reference vehicle usage data among a plurality of groups of reference vehicle usage data and the vehicle usage data; and
a second determination sub-module configured to determine that a largest similarity result among a plurality of groups of similarity results corresponding to the plurality of groups of reference vehicle usage data is greater than the preset threshold and that the object is recognized.

In one embodiment, after the second determination sub-module, the system further includes:
a first obtaining sub-module configured to obtain a vehicle function that a candidate object corresponding to reference vehicle usage data with a largest similarity result has permission to use; and
an authorization module configured to authorize the object to use the vehicle function.

In one embodiment, the vehicle usage data includes a plurality of groups of usage sub-data, and the determination module includes:
a second obtaining sub-module configured to obtain a sub-similarity between each group of usage sub-data and corresponding reference usage sub-data of the reference vehicle usage data;
a third determination sub-module configured to determine that the sum of a plurality of groups of sub-similarity results corresponding to the plurality of groups of usage sub-data is the similarity between the vehicle usage data and the reference vehicle usage data; and
a fourth determination sub-module configured to determine that the similarity is greater than a preset threshold and that the object is recognized.

In one embodiment, the vehicle usage data includes seat usage data corresponding to a vehicle seat, and the obtaining module includes:
a third obtaining sub-module configured to: in response to a trigger signal for the object using the vehicle seat, obtain the seat usage data corresponding to the vehicle seat; and/or
the vehicle usage data includes device usage data corresponding to a terminal device in a vehicle, and the obtaining module includes:
a fourth obtaining sub-module configured to: in response to a trigger signal for the object using the terminal device in the vehicle, obtain the device usage data corresponding to the terminal device.

In one embodiment, the device usage data includes device position data, and the fifth obtaining sub-module includes:
a first obtaining unit configured to obtain device sensor data corresponding to the terminal device; and
a first determination unit configured to determine a position of the terminal device based on the device sensor data and obtain the device position data; and/or
the device usage data includes device position change amplitude data, and the fifth obtaining sub-module includes:
   a second obtaining unit configured to obtain device sensor data corresponding to the terminal device; and
   a second determination unit configured to obtain device position change amplitude data indicating a position change amplitude of the terminal device based on the device sensor data.

All or some of the modules in the object recognition system described above can be implemented by software, hardware and a combination thereof. Each of the modules described above may be embedded in or independent of a processor of a computer device in the form of hardware, or may be stored in a memory of the computer device in the form of software, so that the processor can call and execute the operations corresponding to the modules described above.

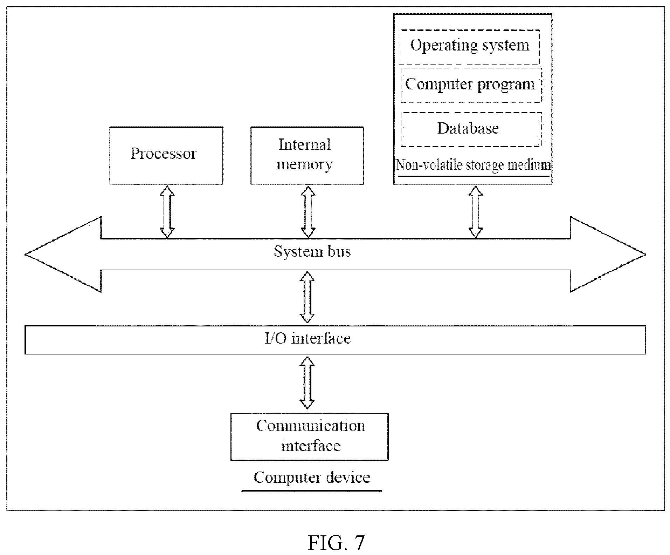

In one embodiment, a computer device is provided, which may be a server, and the diagram of its internal structure may be shown in FIG. 7. The computer device includes a processor, a memory, and a network interface connected through a system bus. The processor of the computer device is configured to provide computing and control capabilities. The memory of the computer device includes a non-volatile storage medium and an internal memory. The non-volatile storage medium stores an operating system, a computer program and a database. The internal memory provides an environment for the operation of the operating system and the computer program in non-volatile storage medium. The database of the computer device is configured to store vehicle usage data, etc. The network interface of the computer device is configured to communicate with an external terminal through a network connection. The computer program, when executed by a processor, implements an object recognition method.

Those skilled in the art can understand that the structure shown in FIG. 7 is only a block diagram of a partial structure related to the solution of the embodiments of the disclosure, and does not constitute a limitation on the computer device to which the solution of the embodiments of the disclosure is applied. A specific computer device may include more or fewer components than shown, or have some components combined, or have a different arrangement of components.

In one embodiment, a computer device is further provided, including a memory and a processor. A computer program is stored in the memory. The processor, when executing the computer program, implements the steps of the above method embodiments.

In one embodiment, a computer-readable storage medium is provided, having a computer program stored thereon. The computer program, when executed by a processor, implements the steps of the above method embodiments.

In one embodiment, a computer program product is provided, including a computer program. The computer program, when executed by a processor, implements the steps of the above method embodiments.

It should be noted that both user information (including but not limited to user device information, user personal information, and object information corresponding to vehicle usage data) and data (including but not limited to data used for analysis, stored data, displayed data, vehicle usage data, reference vehicle usage data, initial vehicle usage data, and candidate vehicle usage data) involved in the embodiments of the disclosure are information and data authorized by the user or fully authorized by all parties. Actions such as data obtaining and collection involved in the embodiments of the disclosure are all performed with the authorization of the user and the object, or after being fully authorized by all parties.

Those of ordinary skill in the art would be able to understand that implementation of all or some of the methods described above could be achieved by hardware commanded by a computer program, which computer program can be stored in a non-volatile computer-readable storage medium and when executed, carry out a procedure as shown in the embodiments of the methods described above. Any reference to the memory, the database or other media used in the embodiments provided in the embodiments of the disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, etc. As an illustration and not a limitation, RAM may be in various forms, such as a static random access memory (SRAM) or a dynamic random access memory (DRAM). The database involved in the various embodiments provided in the embodiments of the disclosure may include at least one of a relational database and a non-relational database. The non-relational database may include a blockchain-based distributed database, etc., but is not limited thereto. The processor involved in the various embodiments provided in the embodiments of the disclosure may be a general-purpose processor, a central processing unit, a graphics processor, a digital signal processor, a programmable logic device, a quantum computing-based data processing logic device, etc., but is not limited thereto.

The technical features of the above embodiments can be combined in any manner, and in order to simplify the description, not all possible combinations of the technical features of the above embodiments are described. However, as long as there is no conflict between the combinations of these technical features, they should be considered to be within the scope of the description in the disclosure.

The embodiments described above merely illustrate several implementations of the embodiments of the disclosure and are described relatively specifically and in detail, but should not be construed as limiting the patent scope of the embodiments of the disclosure. It should be noted that several variations and improvements may also be made by those of ordinary skill in the art without departing from the concept of the embodiments of the disclosure, and should fall within the scope of protection of the embodiments of the disclosure. Therefore, the scope of protection of the embodiments of the disclosure shall be subject to the appended claims.

## Claims

1. An object recognition method, wherein the method comprises:
obtaining, in response to a trigger signal for a preset behavior state of an object, vehicle usage data of the object and reference vehicle usage data of at least one recognized candidate object; and
determining that a similarity between the vehicle usage data and the reference vehicle usage data is greater than a preset threshold and that the object is recognized.

2. The method according to claim 1, wherein in response to obtaining reference vehicle usage data of a plurality of recognized candidate objects, the determining that a similarity between the vehicle usage data and the reference vehicle usage data is greater than a preset threshold and that the object is recognized comprises:
determining a similarity between each group of reference vehicle usage data among a plurality of groups of reference vehicle usage data and the vehicle usage data; and
determining that a largest similarity result among a plurality of groups of similarity results corresponding to the plurality of groups of reference vehicle usage data is greater than the preset threshold and that the object is recognized.

3. The method according to claim 2, wherein after the determining that the object is recognized, the method further comprises:
obtaining a vehicle function that a candidate object corresponding to reference vehicle usage data with a largest similarity result has permission to use; and
authorizing the object to use the vehicle function.

4. The method according to claim 1, wherein the vehicle usage data comprises a plurality of groups of usage sub-data, and the determining that a similarity between the vehicle usage data and the reference vehicle usage data is greater than a preset threshold and that the object is recognized comprises:
obtaining a sub-similarity between each group of usage sub-data and corresponding reference usage sub-data of the reference vehicle usage data;
determining that the sum of a plurality of groups of sub-similarity results corresponding to the plurality of groups of usage sub-data is the similarity between the vehicle usage data and the reference vehicle usage data; and
determining that the similarity is greater than a preset threshold and that the object is recognized.

5. The method according to claim 1, wherein the vehicle usage data comprises seat usage data corresponding to a vehicle seat, and the obtaining, in response to a trigger signal for a preset behavior state of an object, vehicle usage data comprises:
in response to a trigger signal for the object using the vehicle seat, obtaining the seat usage data corresponding to the vehicle seat; and/or
the vehicle usage data comprises device usage data corresponding to a terminal device in a vehicle, and the obtaining, in response to a trigger signal for a preset behavior state of an object, vehicle usage data comprises:
in response to a trigger signal for the object using the terminal device in the vehicle, obtaining the device usage data corresponding to the terminal device.

6. The method according to claim 5, wherein the device usage data comprises device position data, and the obtaining the device usage data corresponding to the terminal device comprises:
obtaining device sensor data corresponding to the terminal device; and
determining a position of the terminal device based on the device sensor data and obtaining the device position data; and/or
the device usage data comprises device position change amplitude data, and the obtaining the device usage data corresponding to the terminal device comprises:
obtaining device sensor data corresponding to the terminal device; and
obtaining device position change amplitude data indicating a position change amplitude of the terminal device based on the device sensor data.

7. An object recognition system (600), wherein the system comprises:
an obtaining module(610) configured to obtain, in response to a trigger signal for a preset behavior state of an object, vehicle usage data of the object and reference vehicle usage data of at least one recognized candidate object; and
a determination module(620) configured to determine that a similarity between the vehicle usage data and the reference vehicle usage data is greater than a preset threshold and that the object is recognized.

8. The system according to claim 7, wherein in response to obtaining reference vehicle usage data of a plurality of recognized candidate objects, the determination module comprises:
a first determination sub-module configured to determine a similarity between each group of reference vehicle usage data among a plurality of groups of reference vehicle usage data and the vehicle usage data; and
a second determination sub-module configured to determine that a largest similarity result among a plurality of groups of similarity results corresponding to the plurality of groups of reference vehicle usage data is greater than the preset threshold and that the object is recognized.

9. The system according to claim 8, wherein after the second determination sub-module, the system further comprises:
a first obtaining sub-module configured to obtain a vehicle function matching a candidate object corresponding to reference vehicle usage data with a largest similarity result; and
an authorization module configured to authorize the object to use the vehicle function.

10. The system according to claim 7, wherein the vehicle usage data comprises a plurality of groups of usage sub-data, and the determination module comprises:
a second obtaining sub-module configured to obtain a sub-similarity between each group of usage sub-data and corresponding reference usage sub-data of the reference vehicle usage data;
a third determination sub-module configured to determine that the sum of a plurality of groups of sub-similarity results corresponding to the plurality of groups of usage sub-data is the similarity between the vehicle usage data and the reference vehicle usage data; and
a fourth determination sub-module configured to determine that the similarity is greater than a preset threshold and that the object is recognized.

11. The system according to claim 7, wherein the vehicle usage data comprises seat usage data corresponding to a vehicle seat, and the obtaining module comprises:
a third obtaining sub-module configured to: in response to a trigger signal for the object using the vehicle seat, obtain the seat usage data corresponding to the vehicle seat; and/or
the vehicle usage data comprises device usage data corresponding to a terminal device in a vehicle, and the obtaining module comprises:
a fourth obtaining sub-module configured to: in response to a trigger signal for the object using the terminal device in the vehicle, obtain the device usage data corresponding to the terminal device.

12. The system according to claim 11, wherein the device usage data comprises device position data, and the fifth obtaining sub-module comprises:
a first obtaining unit configured to obtain device sensor data corresponding to the terminal device; and
a first determination unit configured to determine a position of the terminal device based on the device sensor data and obtain the device position data; and/or
the device usage data comprises device position change amplitude data, and the fifth obtaining sub-module comprises:
a second obtaining unit configured to obtain device sensor data corresponding to the terminal device; and
a second determination unit configured to obtain device position change amplitude data indicating a position change amplitude of the terminal device based on the device sensor data.
